# EUROPEAN PATENT APPLICATION

(11) **EP 4 683 292 A1**
(43) Date of publication of application: **21.01.2026**
(21) Application number: 25189623.9
(22) Date of filing: 15.07.2025
(51) Int. Cl.: H04L 45/24, H04L 47/2483, H04L 47/28, H04W 28/02, H04W 28/24, H04W 84/12

(54) **STREAM CLASSIFICATION SERVICE FOR EVENT-BASED TRAFFIC WITH PREEMPTION REQUIREMENTS**

(30) Priority: 15.07.2024 US 202463671730 P; 14.07.2025 US 202519267825
(71) Applicant: Cisco Technology, Inc., San Jose, CA 95134-1706 (US)
(72) Inventor: Gupta, Binita, San Jose, 95134-1706 (US); Smith, Malcolm Muir, San Jose, 95134-1706 (US); Hart, Brian Donald, San Jose, 95134-1706 (US)
(74) Representative: Noble, Nicholas

(57) **Abstract**

Aspects of the present disclosure are directed to receiving, at an access point (AP) from an endpoint, a stream classification service (SCS) request. The SCS request identifies one or more of QoS characteristics and preemption requirements for a traffic flow originating from the endpoint. The method includes determining, by the AP and based on a policy, whether the AP can accept the SCS request for the traffic flow, and transmitting, by the AP and to the endpoint, an SCS response indicating whether the AP can accept the SCS request for the traffic flow or not.

## Description

### TECHNICAL FIELD

The present disclosure relates to wireless communication standards, and in particular, to enhancing WiFi Stream Classification Service (SCS) for access points to signal low latency and preemption requirements for event-based traffic.

### BACKGROUND

Wi-Fi technology has undergone continuous evolution and innovation since its inception, resulting in significant advancements with each new generation. Following Wi-Fi 5 (802.11ac) there has been Wi-Fi 6 (802.11ax), Wi-Fi 7 (802.11be), and soon there will be Wi-Fi 8 (802.11bn) and Wi-Fi 9, each new Wi-Fi generation brings notable improvements in speed, capacity, efficiency, and overall performance.

Wi-Fi 5 introduced substantial upgrades over its predecessor, Wi-Fi 4 (802.11n). It introduced the use of wider channel bandwidths, multi-user Multiple-Input Multiple-Output (MIMO), and beamforming technologies. These advancements significantly increased data transfer rates and improved network capacity, allowing multiple devices to simultaneously connect and communicate more efficiently. Wi-Fi 6/6E included enhanced Orthogonal Frequency-Division Multiple Access (OFDMA) and Target Wake Time (TWT) mechanisms and included greater frequency and improved overall spectral efficiency and power management and better performance in crowded areas. Wi-Fi 7 (802.11be) delivers speeds of up to 30 Gbps, utilizing multi-band operation, wider bandwidth, advanced MIMO techniques, and improved modulation schemes. Wi-Fi 7 also focuses on reducing latency and enhancing security features.

Wi-Fi 8 (802.11bn) aims to revolutionize wireless connectivity by providing ultra-high reliability enabling rich experiences for QoS demanding applications such as cloud gaming, AR/VR, industrial IoT, wireless TSN etc. Wi-Fi 8 is expected to introduce advancements like seamless roaming, multi-AP coordination for predictable QoS, enhanced power saving and advanced beamforming techniques paving the way for futuristic applications and seamless connectivity experiences.

As Wi-Fi technology continues to evolve, each new Wi-Fi generation brings improvements that address the growing demands of modern networks, including increased device density, higher data rates, lower latency, improved reliability and better overall network performance. These advancements play a crucial role in enabling emerging technologies, supporting the proliferation of smart devices, and transforming the way we connect and communicate in an increasingly interconnected world.

### BRIEF DESCRIPTION OF THE DRAWINGS

To easily identify the discussion of any particular element or act, the most significant digit or digits in a reference number refer to the figure number in which that element is first introduced.

Details of one or more aspects of the subject matter described in this disclosure are set forth in the accompanying drawings and the description below. However, the accompanying drawings illustrate only some typical aspects of this disclosure and are therefore not to be considered limiting of its scope. Other features, aspects, and advantages will become apparent from the description, the drawings, and the claims.

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be a limitation of its scope, the principles herein are described and explained with additional specificity and detail through the use of the accompanying drawings in which:
FIG. 1 illustrates a block diagram of an example wireless communication network according to some aspects of the present disclosure.
FIG. 2A illustrates a network diagram illustrating an example network environment of multi-link operation according to some aspects of the present disclosure.
FIG. 2B illustrates an illustrative schematic diagram for connectivity of an Access Point (AP) Multi-Link Device (MLD) with multiple affiliated APs to a non-AP MLD with multiple affiliated non-AP Stations (STAs) according to some aspects of the present disclosure.
FIG. 3 illustrates an example of a seamless mobility domain according to some aspects of the present disclosure.
FIG. 4 illustrates an example method of operations according to some aspects of the present disclosure.
FIG. 5 illustrates an example of a computing system in accordance with certain embodiments.

### DETAILED DESCRIPTION

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

A used herein the term "configured" shall be considered to interchangeably be used to refer to configured and configurable unless the term "configurable" is explicitly used to distinguish from "configured." The proper understanding of the term will be apparent to persons of ordinary skill in the art in the context in which the term is used.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any example term. Likewise, the disclosure is not limited to various embodiments given in this specification.

Without intent to limit the scope of the disclosure, examples of instruments, apparatus, methods, and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions, will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims or can be learned by the practice of the principles set forth herein.

Aspects of the present disclosure can be implemented in any device, system or network that is capable of transmitting and receiving Radio Frequency (RF) signals according to one or more of the Institute of Electrical and Electronics Engineers (IEEE) 802.11 standards, the IEEE 802.15 standards, the Bluetooth^{®} standards as defined by the Bluetooth Special Interest Group (SIG), or the Long Term Evolution (LTE), 3G, 4G or 5G (New Radio (NR)) standards promulgated by the 3rd Generation Partnership Project (3GPP), among others. The described implementations can be implemented in any device, system or network that is capable of transmitting and receiving RF signals according to one or more of the following technologies or techniques: Code Division Multiple Access (CDMA), Time Division Multiple Access (TDMA), Frequency Division Multiple Access (FDMA), Orthogonal FDMA (OFDMA), Single-Carrier FDMA (SC-FDMA), Single-User (SU) Multiple-Input Multiple-Output (MIMO) and Multi-User (MU) MIMO. The described implementations also can be implemented using other wireless communication protocols or RF signals suitable for use in one or more of a Wireless Personal Area Network (WPAN), a Wireless Local Area Network (WLAN), a Wireless Wide Area Network (WWAN), or an Internet of Things (IOT) network.

### OVERVIEW

Aspects of the present disclosure are directed to a mechanism for end devices to register Low Latency (LL) and preemption requirements for event-based traffic flows with an AP (which may be a Multi-Link Device AP (AP MLD). In some examples such requirements may be signaled through Quality of Service (QoS) element or defining extended QoS element within SCS.

In one aspect, a method includes receiving, at an Access Point (AP) from an endpoint, a stream classification service (SCS) request. The SCS request identifies one or more of Quality of Service (QoS) characteristics and preemption requirements for a traffic flow originating from the endpoint. The method includes determining, by the AP and based on a policy, whether the AP can accept the SCS request for the traffic flow. The method includes transmitting, by the AP and to the endpoint, an SCS response indicating whether the AP can accept the SCS request for the traffic flow or not.

In another aspect, the traffic flow is an event-based traffic flow or an aperiodic traffic flow.

In another aspect, the SCS request further includes one of a Traffic Classification (TCLAS), an Application Identification (APP ID), and a Fully Qualified Domain Name (FQDN) based identification of the event-based traffic flow.

In another aspect, the one or more of the QoS characteristics and the preemption requirements are included in a QoS element or an extended QoS element of the SCS request.

In another aspect, the traffic flow is an event-based traffic flow or an aperiodic traffic flow that is identified via an SCS identification in the SCS request.

In another aspect, the SCS response indicates that the AP can meet the QoS characteristics without preemption.

In another aspect, the SCS response indicates that the AP can meet the QoS characteristics with preemption.

In another aspect, the SCS request is sent to the AP upon receiving an indication that the AP supports preemption.

In another aspect, the method further includes signaling by the AP support for preemption via an Ultra High Reliability (UHR) capabilities element in an Association Response frame.

In another aspect, the QoS characteristics include one or more of: a burst size, a minimum data rate, a delay bound, and a Traffic Identifier (TID) of the traffic flow.

In another aspect, the preemption requirements include one or more of a whether preemption is needed for the traffic flow, a maximum rate of preemption for the traffic flow and a series of possible preemption windows indicating time windows when preemption is desired for the traffic flow.

In another aspects, the series of possible preemption windows are indicated based on a start time in the SCS request or a start time for a restricted TWT service period where the traffic flow is served.

In one aspect, an Access Point (AP) of a plurality of APs in a wireless network is provided. The AP includes at least one memory configured to store computer-readable instructions, and at least one processor communicatively coupled with the at least one memory and configured to execute the computer-readable instructions to perform operations including receiving, from an endpoint, a Stream Classification Service (SCS) request. The SCS request identifies one or more of Quality of Service (QoS) characteristics and preemption requirements for a traffic flow originating from the endpoint. The operations include determining, based on a policy, whether the AP can accept the SCS request for the traffic flow, and transmitting, to the endpoint, an SCS response indicating whether the AP can accept the SCS request for the traffic flow or not.

In one aspect, a non-transitory computer-readable media includes computer-readable instructions stored thereon, which, when executed by at least one processor of an Access Point (AP), cause the AP to: receive, from an endpoint, a Stream Classification Service (SCS) request; determine, based on a policy, whether the AP can accept the SCS request for a traffic flow, and transmit, to the endpoint, an SCS response indicating whether the AP can accept the SCS request for the traffic flow or not. The SCS request identifies one or more of Quality of Service (QoS) characteristics and preemption requirements for the traffic flow originating from the endpoint.

### EXAMPLE EMBODIMENTS

IEEE 802.11, commonly referred to as Wi-Fi, has been around for three decades and has become arguably one of the most popular wireless communication standards, with billions of devices supporting more than half of the worldwide wireless traffic. The increasing user demands in terms of throughput, capacity, latency, spectrum, and power efficiency call for updates or amendments to the standard to keep up with them. As such, Wi-Fi generally has a new amendment after every 5 years with its own characteristic features. In the earlier generations, the focus was primarily higher data rates, but with ever increasing density of devices, area efficiency has become a major concern for Wi-Fi networks. Due to this issue, the last (802.11 be (Wi-Fi 7)) amendments focused more on efficiency. The next expected update to IEEE 802.11 is coined as Wi-Fi 8. Wi-Fi 8 will attempt to further enhance throughput and minimize latency to meet the ever growing demand for the Internet of Things (IoT) , high resolution video streaming, low-latency wireless services, etc.

Multiple Access Point coordination and transmission in Wi-Fi refers to the management of multiple access points in a wireless network to avoid interference and ensure efficient communication between the client devices and the network. When multiple access points are deployed in a network - for instance in buildings and office complexes - they operate on the same radio frequency, which can cause interference and degrade the network performance. To mitigate this issue, access points can be configured to coordinate their transmissions and avoid overlapping channels.

Wi-Fi 7 introduced the concept of Multi-Link Operation (MLO), which gives the devices (Access Points (APs) and Stations (STAs)) the capability to operate on multiple links (or even bands) at the same time. MLO introduces a new paradigm to multi-AP coordination which was not part of the earlier coordination approaches. MLO is considered in Wi-Fi-7 to improve the throughput of the network and address the latency issues by allowing devices to use multiple links. STAs may also be referred to as non-AP devices.

A multi-link device (MLD) may have several "affiliated" devices, each affiliated device having a separate PHY interface, and the MLD having a single link to the Logical Link Control (LLC) layer. In the proposed IEEE 802.11 be draft, a multi-link device (MLD) is defined as: "A device that is a logical entity and has more than one affiliated Station (STA) and has a single Medium Access Control (MAC) Service Access Point (SAP) to Logical Link Control (LLC), which includes one MAC data service" (see: LAN/MAN Standards Committee of the IEEE Computer Society, Amendment 8: Enhancements for extremely high throughput (EHT), IEEE P802.11 be^{™}/D0.1 , Sep. 2020, section 3.2). Connection(s) with an MLD on the affiliated devices may occur independently or jointly. A preliminary definition and scope of a multi-link element is described in section 9.4.2.247b of aforementioned IEEE 802.11 be draft. An idea behind this information element/container is to provide a way for Multi-Link Devices (MLDs) to share the capabilities of different links with each other and facilitate the discovery and association processes. However, this information element may still be changed, or new mechanisms may be introduced to share the MLO information (e.g., related to backhaul usage).

In multi-link operation (MLO) both STA and APs can possess multiple links that can be simultaneously active. These links may or may not use the same bands/channels.

MLO allows sending PHY Protocol Data Units (PPDUs) on more than one link between a STA and an AP. The links may be carried on different channels, which may be in different frequency bands. Based on the frequency band and/or channel separation and filter performance, there may be restrictions on the way the PPDUs are sent on each of the links.

MLO may include a basic transmission mode, an asynchronous transmission mode, and a synchronous transmission mode.

In a basic transmission mode, there may be multiple primary links, but a device may transmit PPDU on one link at a time. The link for transmission may be selected as follows. The device (such as an AP or a STA) may count down a Random Back Off (RBO) on both links and select a link that wins the medium for transmission. The other link may be blocked by in-device interference. In basic transmission mode, aggregation gains may not be achieved.

In an asynchronous transmission mode, a device may count down the RBO on both links and perform PPDU transmission independently on each link. The asynchronous transmission mode may be used when the device can support simultaneous transmission and reception with bands that have sufficient frequency separation such as separation between the 2.4 GHz band and the 5 GHz band. The asynchronous transmission mode may provide both latency and aggregation gains.

In a synchronous PPDU transmission mode, the device may count down the RBO on both links. If a first link wins the medium, both links may transmit PPDUs at the same time. The transmission at the same time may minimize in-device interference and may provide both latency and aggregation gains.

An Ultra High Reliability (UHR) concept of Wi-Fi 8 is focused on improving reliability of Wi-Fi connectivity, for example, by increasing data transfer rates, reducing latency and jitter, and implementing power saving and peer-to-peer operation mechanisms. The UHR concept relies on preemption for supporting low latency to achieve latency that is less than Transmission Opportunity (TXOP) duration of 1 to 5 milliseconds (ms). The TXOP is a time interval during which a station is allowed to transmit multiple frames without contention. This mechanism, part of the IEEE 802.11e standard (and later revisions), enhances Quality of Service (QoS) by reducing latency and increasing throughput for high-priority traffic.

LL for event-based traffic and aperiodic traffic as well as more predictable periodic traffic using preemption is defined in 802.11be. In 802.11 be, SCS with QoS characteristics element provides QoS or LL requirements for period traffic, However, for event-based traffic which do not have periodicity requirements, the standards do not provide a mechanism for STAs to signal LL and preemption requirements. Some even based traffic may require preemption to meet their LL requirements. Some other event-based traffic may be more tolerant to delay and may not require preemption.

Various aspects described herein provide a mechanism for STAs to provide LL and preemption requirements for event-based traffic. In one or more example embodiments, SCS enhancements are described to provide QoS requirements for event-based traffic including preemption related requirements. As a result, a desired low latency, for example, less than 1 ms, for event-based traffic and/or periodic traffic can be achieved.

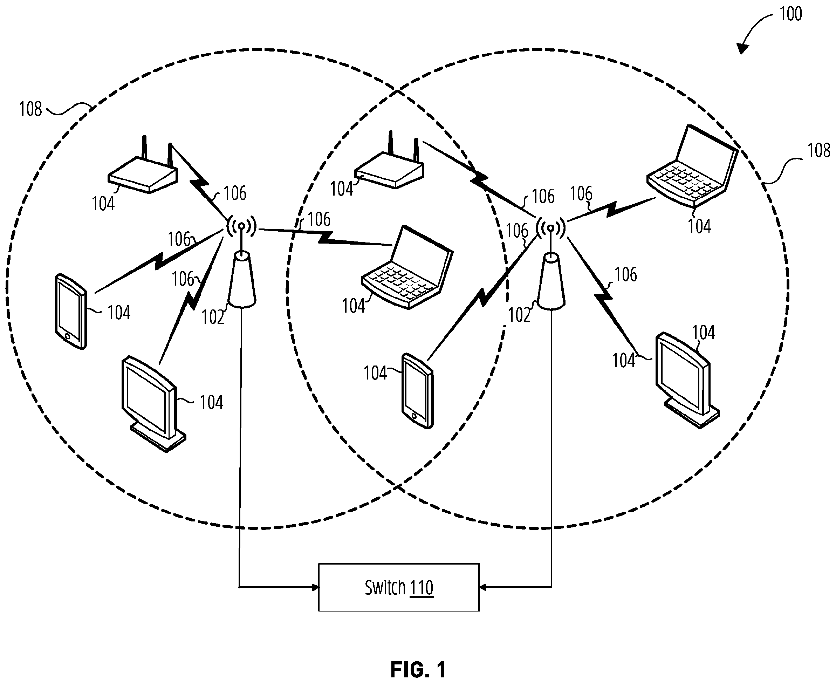

FIG. 1 illustrates a block diagram of an example wireless communication network according to some aspects of the present disclosure. According to some aspects, the wireless communication network 100 may be an example of a Wireless Local Area Network (WLAN) such as a Wi-Fi network. For example, the wireless communication network 100 may be a network implementing at least one of the IEEE 802.11 family of wireless communication protocol standards and amendments thereof (such as that defined by the IEEE 802.11-2016 specification or amendments thereof including, but not limited to, 802.11ay, 802.11ax, 802.11az, 802.11ba and 802.11be). Additionally, the wireless communication network 100 may implement future versions and amendments of the wireless communication protocol standards and amendments thereof such as 802.11bn and be modified according to the present disclosure to include the features contained herein.

Wireless communication network 100 may include numerous wireless communication devices such as an AP, which can be one or more of a non-MLD AP, an AP affiliated with an AP MLD, and/or an AP MLD. In the examples presented herein, the AP can exclude an upper UMAC. Therefore, the AP can include the lower UMAC, LMAC, and/or PHY. Additionally, the WLAN can include one or more of STAs 104, which can be one or more of a non- MLD STA, a STA affiliated with a non-AP MLD, and/or a non-AP MLD. As illustrated, wireless communication network 100 also may include multiple APs such as APs 102 (may also be referred to as simply AP). APs 102 can be coupled to one another through a switch 110. While APs 102 are shown as being coupled to one another through switch 110, wireless communication network 100 can provide another device that allows the coupling of multiple APs. In another example, switch 110 can be a network controller configured to coordinate and manage operations of different APs such as APs 102.

Each of STAs 104 also may be referred to as a mobile station (MS), a mobile device, a mobile handset, a wireless handset, an Access Terminal (AT), a User Equipment (UE), a Subscriber Station (SS), client, or a subscriber unit, among other examples. The STAs 104 may represent various devices such as mobile phones, Personal Digital Assistant (PDAs), other handheld devices, netbooks, notebook computers, tablet computers, laptops, display devices (for example, TVs, computer monitors, navigation systems, among others), music or other audio or stereo devices, remote control devices ("remotes"), printers, kitchen or other household appliances, key fobs (for example, for Passive Keyless Entry and Start (PKES) systems), among other examples. In other examples, the STAs 104 can be referred to as clients and/or client devices.

Any one of APs 102 and an associated set of STAs (e.g., STAs 104) may be referred to as a Basic Service Set (BSS), which is managed by a respective AP of APs 102. FIG. 1 additionally shows an example coverage area 108 of the each of APs 102, which may represent a Basic Service Area (BSA) of wireless communication network 100. As illustrated, three of STAs 104 are within the BSA of each of APs 102. The BSS may be identified to users by a Service Set Identifier (SSID), where the BSS might be one of many in the SSID. The BSS may be identified to other devices by a unique (or substantially unique) Basic Service Set Identifier (BSSID). One or more of APs 102 periodically broadcasts beacon frames ("beacons") including the BSSID to enable STAs 104 within a wireless range of one or more of APs 102 to "associate" or re-associate with APs 102 to establish a respective communication link of communication links 106 (hereinafter also referred to as a "Wi-Fi link"), or to maintain communication links 106, with APs 102. For example, the beacons may include an identification of a primary channel used by respective AP of APs 102 as well as a timing synchronization function for establishing or maintaining timing synchronization with APs 102. APs 102 may provide communication links 106 to STAs 104 and therefore access to external networks. While the example has been described in regard to APs 102 and STAs 104, the present disclosure extends such that an AP may provide access to external networks to various STAs in a WLAN via communication links 106.

To establish communication links 106 with any one of APs 102, each of STAs 104 is configured to perform passive or active scanning operations ("scans") on frequency channels in one or more frequency bands (for example, the 2.4 GHz, 5 GHz, 6 GHz, or 60 GHz bands). To perform passive scanning, STAs 104 listen for beacons, which are transmitted by a respective AP of APs 102 at or near a periodic time referred to as the Target Beacon Transmission Time (TBTT) (measured in Time Units (TUs) where one TU may be equal to 1024 microseconds (µs)). To perform active scanning, STAs 104 generate and sequentially transmits probe requests on each channel to be scanned and listens for probe responses from APs 102. STAs 104 may be configured to identify or select an AP and thence a selected AP of APs 102 with which to associate based on the scanning information obtained through the passive or active scans, and to perform authentication and association operations to establish the communication links 106 with the selected AP of APs 102. The selected AP of APs 102 assigns an Association Identifier (AID) to STAs 104 at the culmination of the association operations, which selected AP of APs 102 uses to improve the efficiency of certain signaling to the STAs 104.

The present disclosure modified the WLAN radio and baseband protocols for the PHY and Medium Access Controller (MAC) layers. APs 102 and STAs 104 transmit and receive wireless communications (hereinafter also referred to as "Wi-Fi communications") to and from one another in the form of PHY Protocol Data Units (PPDUs). APs 102 and STAs 104 also may be configured to communicate over other frequency bands such as shared licensed frequency bands, where multiple operators may have a license to operate in the same or overlapping frequency band or bands.

Each PPDU is a composite structure that includes a PHY preamble and a payload in the form of one or more PHY Service Data Unit (PSDU). The information provided in the preamble may be used by a receiving device to decode the subsequent data in an intended PSDU. In instances in which PPDUs are transmitted over a bonded channel, selected preamble fields may be duplicated and transmitted in each of the multiple component channels.

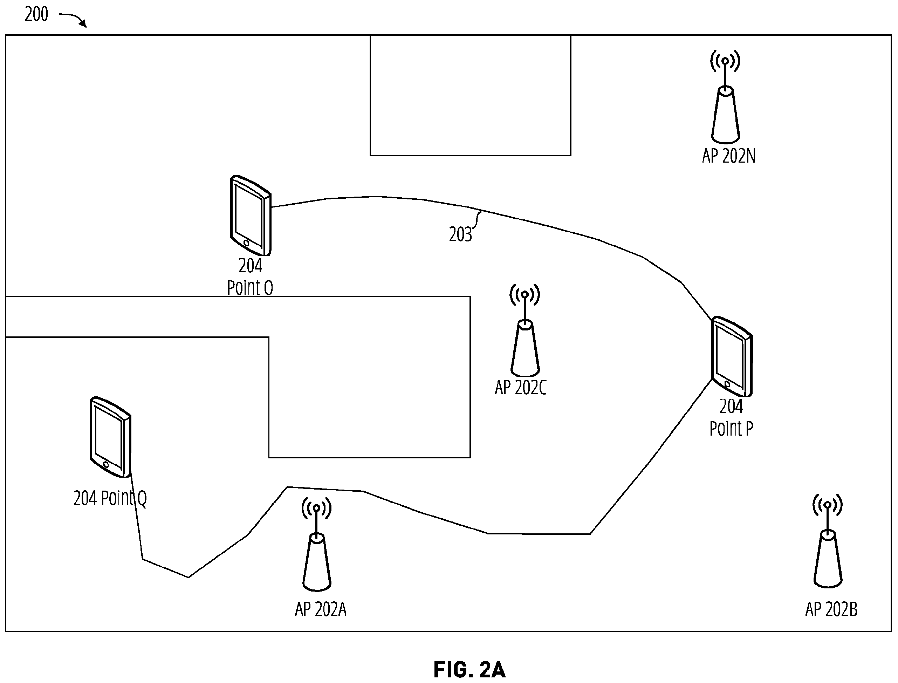

FIG. 2A illustrates an example of a single floor of building equipped with wireless communication according to some aspects of the present disclosure. While only a single floor 200 is illustrated a description equally applies to multiple floors in a building. Additionally, some of the floors in a building may not be contiguous, such that floors 1, 3, 4, and 8 span a network for a building that has floors 1-10. Thus, in at least one implementation the building can include one or more floors that do not have a network including one or more APs. As illustrated, the single floor 200 includes AP 202A, AP 202B, AP 202C, and AP 202N. Each of the AP 202A, AP 202B, AP 202C, and/or AP 202N can have a respective coverage area such that an overall coverage area can span substantially the entire floor. In other examples, the overall coverage area can extend beyond the entire floor. In other examples, the overall coverage area can extend beyond the entire floor. Additionally, the coverage of an AP of AP 202A, AP 202B, AP 202C, and AP 202N may substantially overlap with the coverage of another AP of the AP 202A, AP 202B, AP 202C, and AP 202N.

As illustrated by line 203, STA 204 can move from point O to point P to point Q. When a STA 204 is moving around on a given floor, one or more of AP 202A, AP 202B, AP 202C, and AP 202N can be considered to be nearest to STA 204. Nearest as used in relation to AP 202A, AP 202B, AP 202C, AP 202N and STA 204 can include being physically nearest (for example, a Euclidean distance on the floor) and/or pathloss-nearest (for example, having the lowest wireless attenuation (pathloss) between a subset of APs, among all the APs, and the STA). Additionally, the pathloss-nearest approach can be used to reduce the likelihood of connection between an AP on a floor above or below STA 204. The location of the AP on the floor above or below might be closer in a Euclidean sense, but also not be a desirable AP for the connection of the device or station due to the floor location and/or possible signal interruption. The location of the AP on the floor above or below might be closer in a straight line and/or Euclidean sense, but also not be a desirable AP for the connection of the device or station due to the floor location and/or possible signal interruption. Additionally, the coverage of one or more APs can at least partially overlap with the coverage of one or more other APs. The present disclosure provides for selecting the AP and/or providing a communication pathway from one or more STA through one or more APs.

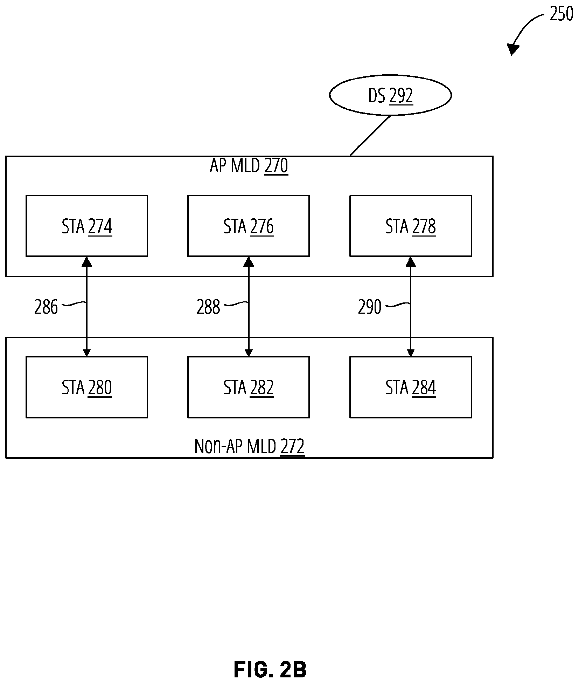

FIG. 2B depicts an illustrative schematic diagram for MLO between an AP MLD with affiliated logical entities and a non-AP MLD with affiliated logical entities according to some aspects of the present disclosure.

Referring to FIG. 2B, schematic diagram 250 may include two multi-link logical entities AP MLD 270 and Non-AP MLD 272. AP MLD 270 may include physical and/or logically affiliated AP such as AP 274, AP 276, and AP 278 operating in different channels and typically different frequency bands (e.g., 2.4 GHz, 5 GHz, and 6 GHz). AP 274, AP 276, and AP 278 may be the same as or similar to any one of the APs described above. Non-AP MLD 272 may include STA 280, STA 282, and STA 284, which may be the same as or similar to any of the STAs as described herein.

AP 274 may communicate with STA 280 via link 286. AP 276 may communicate with STA 282 via link 288. AP 278 may communicate with STA 284 via link 290.

AP MLD 270 is shown in FIG. 2B to have access to a Distribution System (DS) such as DS 292, which is a system used to interconnect a set of BSSs to create an Extended Service Set (ESS).

It should be understood that although the example shows three logical entities within the AP MLD and the three logical entities within the non-AP MLD, this is merely for illustration purposes and that other numbers of logical entities within each of the AP MLD and Non-AP MLD may be envisioned. The example Wi-Fi systems and MLO described above with reference to FIGs. 1 and 2A-2B provide examples of simplified and example systems of the present disclosure.

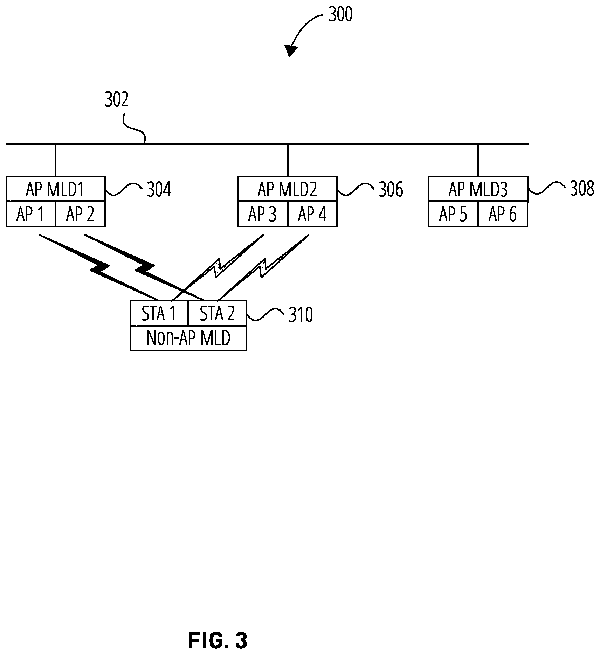

FIG. 3 illustrates an example architecture 300 in which multi-AP coordination technologies may be practiced according to some aspects of the present disclosure. The architecture 300 includes a DS 302 (may be the same as the DS 292) that is a logically connected entity that includes AP MLD1 304, AP MLD2 306, and AP MLD3 308, all of which can form an ESS (e.g., all AP MLDs which are part of a campus ESS network). Architecture 300 also shows a non-AP MLD 310 that may be connected to AP MLD1 304.

AP MLD1 304 may include one or more APs such as AP1 and AP2. AP1 and AP2 may be different physical APs (or AP interfaces) co-located in AP MLD1 304. Similarly, AP MLD2 306 may include one or more APs such as AP3 and AP4. AP3 and AP4 may be different physical APs (or AP interfaces) co-located in AP MLD2 306. Similarly, AP MLD3 308 may include one or more APs such as AP5 and AP6. AP5 and AP6 may be different physical APs (or AP interfaces) co-located in AP MLD3 308. The number of AP MLDs and/or the number of respective APs of each AP MLD is not limited to the example numbers shown in FIG. 2B and may include more or less.

In one example, AP MLD1 304, AP MLD2 306, and AP MLD3 308 may be located in different geographical locations (e.g., different rooms of the same building, different floors of the same building, different buildings of the same campus or area, etc.).

The non-AP MLD 310 may be any known or to be developed device capable of establishing one or more wireless communication links with one or more of AP MLD1 304, AP MLD2 306, and/or AP MLD3 308. As a non-limiting example, non-AP MLD 310 may be a mobile device having two wireless interfaces, each of which may correspond to one of STA 1 or STA 2. In one example, each one of STA 1 and STA 2 may operate on a different link (e.g., 5 GHz for STA 1 and 6 GHz for STA 2). The number of non-AP MLDs and/or STAs associated with each is not limited to that shown in FIG. 3 and may be more or less.

As shown in FIG. 3, the non-AP MLD 310 is associated with the architecture 300 with multiple links set up with the AP MLD1 304 (for example, 2.4 GHz link with the AP1 for the STA 1 and 5 GHz link with the AP2 for the STA 2). For one of the links (for example, 2.4 GHz), the AP MLD1 304 may detect a weak RSSI. As a result, AP MLD1 304 determines a specific roaming target AP3 of AP MLD2 306 for that link to Switch too. Similarly, the same process may be performed for the other link (for example, the 5 GHz) to Switch to a link with STA 4 on the AP MLD2 205.

Hereinafter, example mechanisms for STAs to provide LL and preemption requirements to AP(s) for event-based traffic is described. In one or more example embodiments, SCS enhancements are described to provide QoS requirements for event-based traffic including preemption related requirements. As a result, a desired low latency, for example, less than 1 ms, for event-based traffic and/or periodic traffic can be achieved.

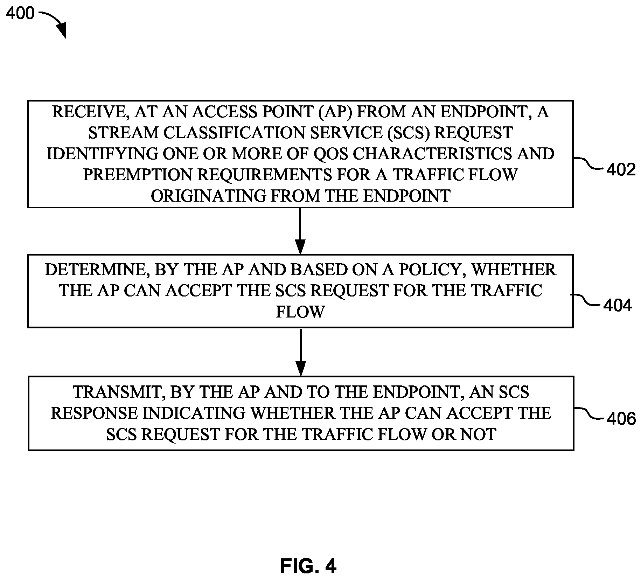

FIG. 4 illustrates an example flow-chart 400 of method operations for Stream Classification Service (SCS) enhancements for event-based traffic flow having preemption requirements according to some aspects of the present disclosure. The event-based traffic flow from different Stations (STAs) can have different requirements related to, for example, latency, delay, burst size, data rate, etc. It is preferred that the latency is as low as possible, e.g., 1-10 milliseconds. LL traffic from STAs can be in Uplink (UL) direction, Downlink (DL) direction, or in both UL & DL directions. One example LL requirement for traffic in UL direction, e.g., in case of Extended Reality (XR), is that latency is around 2 milliseconds (ms).

Steps of FIG. 4 will now be described from the perspective of an AP (e.g., one of APs 102, AP MLD 1 304, AP MLD 2 306, AP MLD 3 308, etc. However, the present disclosure is not limited thereto and the process may be performed by other components of architectures and systems described with reference to FIGs. 1-3 such as network controller (e.g., switch 110).

At step 402, a SCS request may be received at an AP from an endpoint (also referenced herein as an STA). The SCS request may be sent by the STA to the AP to register the STA's LL requirements for a traffic flow and identifies one or more of QoS characteristics and preemption requirements for the traffic flow originating from the STA. The traffic flow may be event-based traffic flow, aperiodic traffic flow, periodic traffic flow, or a traffic flow that requires LL such as an UL pose data flow for extended reality (XR). In one example, the traffic's LL requirements are communicated to the AP using an Extended Quality of Service (QoS) Characteristics element, or the current QoS Characteristic element, which indicates at least direction of the traffic such as, UL, DL, and/or both UL and DL. Additionally, delay bound, minimum data rate, burst size, and Traffic Identifier (TID) may also be communicated to the AP using the (Extended) QoS Characteristics element.

In some examples, both STA and AP announce capability for supporting preemption. For example, an AP announces the capability to support preemption in UHR Operation of UHR Capabilities element. Similarly, STA announces the capability to support preemption in the UHR Capabilities element. The STA sends an SCS request with (Extended) QoS Characteristics with QoS (latency, burst size, etc.) and preemption requirements, upon receiving an indication that the AP supports preemption.

In one example, in order for the AP to identify and/or prioritize the traffic flow, an Application ID and/or a Fully Qualified Domain Name (FQDN)-based identification are included in the (Extended) QoS Characteristics element. In addition, the (Extended) QoS Characteristics element indicates preemption requirements for the traffic flow by including one or more of the following: (1) whether preemption is requested for the traffic flow, (2) maximum rate of preemption desired (e.g., preemption one Transmission Opportunity (TXOP) every few milliseconds/seconds/minutes), and (3) a series of "Possible Pre-emption Windows" (PPWs) indicating time windows when preemption would be needed. In some aspects, the PPWs may be synchronized with a Start Time indicated in the SCS or with another SCS or Restricted Target Wake Time (R-TWT) flow to provide scheduling hint to the AP for PPWs. In response to the preemption requirements received from the STA, the AP can then prepare for preemption in the PPWs by, e.g., using a shorter Physical Protocol Data Unit (PPDU), using a larger PCF Interframe Space (PIFS), and/or disabling an UL trigger.

Accordingly, as described herein, an STA may send a SCS request with (Extended) QoS Characteristics element specifying various QoS requirements, e.g., latency, burst size, preemption, etc., of a traffic flow. As described earlier, the traffic flow may be an event-based traffic flow. The SCS request may also include a Traffic Classification and Scheduling (TCLAS), an Application Identification (App ID), and/or a FQDN-based identification for the AP to identify the traffic flow. The (Extended) QoS Characteristics elements may correspond with an enhanced QoS Characteristics element as defined in IEEE 802.11be is enhanced to additionally support preemption requirement. Further, a control info field corresponding to the QoS Characteristics element may also updated to indicate whether the preemption requirement field is present in the enhanced QoS Characteristics element.

In some examples, the traffic flow such as an event-based traffic may also be identified based upon an SCS ID in the SCS request. Based on AP's SCS policy, an AP receiving the SCS request can accept or reject the SCS request. The AP's SCS policy generally defines how an STA can request from an AP a specific QoS treatment, how the AP classifies data units of incoming traffic from the STA, how QoS is applied using user priority, drop eligibility, and/or EDCA transmit queue for the matching data frames to ensure high-priority traffic gets preferential treatment. Accordingly, the AP's SCS policy can be directed to provide intelligent management of data streams to improve network performance and user experience by prioritizing important or STA identified traffic flows.

Upon receiving the SCS request at step 402, based on the AP's SCS policy, at step 404, the AP may determine whether the AP can accept the SCS request. The AP may either accept or reject the SCS request. The AP may generate and transmit a response to the STA at step 406. The response generated and transmitted by the AP to the STA indicates whether the AP will try to meet the QoS requirements without preemption, and/or whether the AP accepts the preemption requirements for the traffic flow and will try to enable preemption if the AP can enable preemption. Further, based on the STA's registration of SCS traffic flow, the AP identifies traffic flow that needs preemption.

In some examples, AP and/or STA do not support preemption. Even in such cases where the AP and/or the STA do not support preemption, it is generally beneficial for the AP to know the STA's QoS requirements such as latency, burst size, minimum data rate, etc., for the traffic flow. Accordingly, the AP can try to meet the STA's QoS requirements for the traffic flow when the traffic flow becomes active. Accordingly, even when the AP or STA does not support preemption, the STA can transmit an SCS request with (Extended) QoS Characteristics with QoS requirements and flow identification (e.g., TCLAS, App ID and/or FQDN) for the traffic flow.

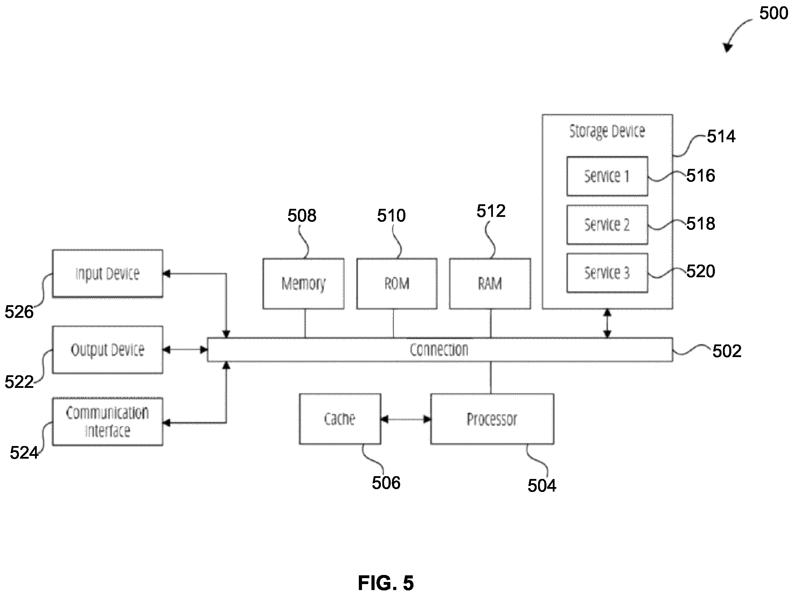

FIG. 5 shows an example of computing system 500, which can be for example any computing device making up the systems of FIGS. 1, 2A, 2B, 3, and/or 4, or any component thereof in which the components of the system are in communication with each other using connection 502. Connection 502 can be a physical connection via a bus, or a direct connection into processor 504, such as in a chipset architecture. Connection 502 can also be a virtual connection, networked connection, or logical connection.

In some embodiments, computing system 500 is a distributed system in which the functions described in this disclosure can be distributed within a datacenter, multiple data centers, a peer network, etc. In some embodiments, one or more of the described system components represent many such components each performing some or all of the functions for which the component is described. In some embodiments, the components can be physical or virtual devices.

Example computing system 500 includes at least one processing unit (CPU or processor) such as processor 504 and connection 502 that couples various system components including system memory 508, such as Read-Only Memory (ROM) such as ROM 510 and Random Access Memory (RAM) such as RAM 512 to processor 504. Computing system 500 can include a cache of high-speed memory 506 connected directly with, in close proximity to, or integrated as part of processor 504.

Processor 504 can include any general-purpose processor and a hardware service or software service, such as services 516, 518, and 520 stored in storage device 514, configured to control processor 504 as well as a special-purpose processor where software instructions are incorporated into the actual processor design. Processor 504 may essentially be a completely self-contained computing system, containing multiple cores or processors, a bus, memory controller, cache, etc. A multi-core processor may be symmetric or asymmetric.

To enable user interaction, computing system 500 includes an input device 526, which can represent any number of input mechanisms, such as a microphone for speech, a touch-sensitive screen for gesture or graphical input, keyboard, mouse, motion input, speech, etc. Computing system 500 can also include output device 522, which can be one or more of a number of output mechanisms known to those of skill in the art. In some instances, multimodal systems can enable a user to provide multiple types of input/output to communicate with computing system 500. Computing system 500 can include communication interface 524, which can generally govern and manage the user input and system output. There is no restriction on operating on any particular hardware arrangement, and therefore the basic features here may easily be substituted for improved hardware or firmware arrangements as they are developed.

Storage device 514 can be a non-volatile memory device and can be a hard disk or other types of computer readable media which can store data that are accessible by a computer, such as magnetic cassettes, flash memory cards, solid state memory devices, digital versatile disks, cartridges, Random Access Memories (RAMs), Read-Only Memory (ROM), and/or some combination of these devices.

The storage device 514 can include software services, servers, services, etc., that when the code that defines such software is executed by the processor 504, it causes the system to perform a function. In some embodiments, a hardware service that performs a particular function can include the software component stored in a computer-readable medium in connection with the necessary hardware components, such as processor 504, connection 502, output device 522, etc., to carry out the function.

For clarity of explanation, in some instances, the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer-readable media. Such instructions can comprise, for example, instructions and data which cause or otherwise configure a general-purpose computer, special purpose computer, or special purpose processing device to perform a certain function or group of functions. Portions of computer resources used can be accessible over a network. The executable computer instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

As one example, there is provided a computer readable medium carrying instructions which, when executed by one or more processors, causes any of the methods described herein to be carried out.

Devices implementing methods according to these disclosures can comprise hardware, firmware, and/or software, and can take any of a variety of form factors. Typical examples of such form factors include servers, laptops, smartphones, small form factor personal computers, personal digital assistants, and so on. The functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A method comprising:
receiving, at an Access Point, AP, from an endpoint, a Stream Classification Service, SCS, request, SCS request, wherein the SCS request identifies one or more of QoS characteristics and preemption requirements for a traffic flow originating from the endpoint;
determining, by the AP and based on a policy, whether the AP can accept the SCS request for the traffic flow; and
transmitting, by the AP and to the endpoint, an SCS response indicating whether the AP can accept the SCS request for the traffic flow or not.

2. The method of claim 1, wherein the SCS request further includes one of a Traffic Classification, TCLAS, an Application Identification, App ID, and a Fully Qualified Domain Name, FQDN, based identification of the traffic flow, and wherein the traffic flow is an event-based traffic flow or an aperiodic traffic flow.

3. The method of any preceding claim, wherein the one or more of the QoS characteristics and the preemption requirements are included in a QoS element or an extended QoS element of the SCS request.

4. The method of any preceding claim, wherein the traffic flow is an event-based traffic flow or an aperiodic traffic flow that is identified via an SCS identification in the SCS request.

5. The method of any preceding claim, wherein the SCS response indicates that the AP can meet the QoS characteristics without preemption.

6. The method of any preceding claim, wherein the SCS response indicates that the AP can meet the QOS characteristics with preemption.

7. The method of any preceding claim, wherein the SCS request is sent to the AP upon receiving an indication by the endpoint that the AP supports preemption, the method optionally further comprising:
signaling, by the AP, support for preemption via an UHR capabilities element in an association response frame or probe response frame.

8. The method of any preceding claim, wherein the QoS characteristics includes one or more of a burst size, a minimum data rate, a delay bound, and a Traffic Identifier (TID) of the traffic flow.

9. The method of any preceding claim, wherein the preemption requirements include one or more of a whether preemption is needed for the traffic flow, a maximum rate of preemption for the traffic flow and a series of possible preemption windows indicating time windows when preemption is desired for the traffic flow, optionally wherein the series of possible preemption windows are indicated based on a start time in the SCS request or a start time for a restricted TWT service period where the traffic flow is served.

10. An Access Point, AP, comprising:
at least one memory configured to store computer-readable instructions; and
at least one processor communicatively coupled with the at least one memory and configured to:
receive, from an endpoint, a Stream Classification Service, SCS, request, SCS request, wherein the SCS request identifies one or more of QoS characteristics and preemption requirements for a traffic flow originating from the endpoint;
determine, based on a policy, whether the AP can accept the SCS request for the traffic flow; and
transmit, to the endpoint, an SCS response indicating whether the AP can accept the SCS request for the traffic flow or not.

11. The AP of claim 12, wherein the SCS request further includes one of a Traffic Classification, TCLAS, an Application Identification, App ID, and a Fully Qualified Domain Name, FQDN, based identification of the traffic flow, and wherein the traffic flow is an event-based traffic flow.

12. The AP of claim 10 or 11, wherein one or more of:
A) wherein the one or more of the QoS characteristics and the preemption requirements are included in a QoS element or an extended QoS element of the SCS request;
B) the traffic flow is an event-based traffic flow that is identified via an SCS identification in the SCS request;
C) the SCS response indicates that the AP can meet the QoS characteristics with or without preemption;
D) the QoS characteristics includes one or more of a burst size, a minimum data rate, a delay bound, and a Traffic Identifier (TID) of the traffic flow.
E) the preemption requirements include a maximum rate of preemption for the traffic flow and a series of possible preemption windows.

13. The AP of any of claims 12 to 16, wherein the SCS request is sent to the AP upon receiving an indication by the endpoint that the AP supports preemption, optionally wherein the AP is configured to signal support for preemption via an UHR capabilities element in an association response frame.

14. A computer readable medium carrying instructions which, when executed by one or more processors cause the method of any of claims 1 to 9 to be carried out.
